# FASCICULE DE BREVET EUROPEEN

(11) **EP 1 870 867 B1**
(45) Date de publication et mention de la délivrance du brevet: **26.01.2011**
(21) Numéro de dépôt: 07011941.7
(22) Date de dépôt: 19.06.2007
(51) Int. Cl.: G08C 17/02, E06B 9/68

(54) **Procédé de communication dans un système domotique et système domotique pour sa mise en oeuvre**
Kommunikationsverfahren in einer Heimanlage und Heimsystem zu dessen Umsetzung
Communication method in a home automation system and home automation system for implementing same

(30) Priorité: 19.06.2006 FR 0605424
(43) Date de publication de la demande: 26.12.2007
(73) Titulaire: Somfy SAS, 74300 Cluses (FR)
(72) Inventeur: Depreux, Vincent, 74800 La Roche-sur-Foron (FR)
(74) Mandataire: Bugnion Genève

(56) Documents cités:
- WO-A-2005/038738
- WO-A2-03/083802
- US-A1- 2004 250 964
- US-A1- 2006 101 721
- US-A1- 2006 185 799

## Description

L'invention concerne le domaine des systèmes de commande domotique, en particulier des systèmes de commande des ouvrants de la maison (portes, fenêtres, volets, portes de garage, portails, écrans ou protections solaires diverses).

Ces systèmes de commande comportent généralement des points de commande, nomades ou fixes, et des actionneurs, permettant de provoquer le mouvement des ouvrants de la maison.

Les points de commande présentent une interface utilisateur, plus ou moins évoluée, permettant à un utilisateur d'envoyer des ordres de commande vers les actionneurs. L'interface peut ainsi comprendre des boutons poussoirs de commande d'ouverture, de fermeture ou d'arrêt du mouvement.

Dans un tel système domotique, les ordres de commande sont transmis depuis les points de commande vers les actionneurs de manière filaire ou sans fil, par exemple par ondes radio.

L'interface utilisateur du point de commande peut avantageusement présenter également une interface visuelle, par exemple des diodes lumineuses ou un écran d'affichage, permettant de traduire sous forme lisible ou compréhensible par l'utilisateur, un certain nombre d'informations relatives notamment aux commandes émises depuis ce point de commande.

Dans un système monodirectionnel, dans lequel les points de commande sont des émetteurs simples, l'interface visuelle peut traduire qu'un ordre a correctement été émis, ou à l'inverse, qu'une action de commande n'a pas donné lieu à l'émission d'un ordre de commande.

Avantageusement, les points de commande sont à la fois émetteurs d'ordres et récepteurs d'informations, de même que les actionneurs sont récepteurs d'ordres et émetteurs d'informations. Ainsi, ces éléments communiquent de manière bidirectionnelle. Un point de commande peut, suite à l'émission d'un ordre, recevoir un accusé de réception (du type "l'ordre est bien en train de s'exécuter" ou "l'ordre a bien été exécuté") de la part de l'actionneur qu'il commande. Cet accusé de réception s'affiche alors au niveau de l'interface visuelle du point de commande.

Pour des raisons de coûts, la plupart des points de commande ne possèdent pas d'interface visuelle ou plus souvent une interface visuelle limitée. L'ergonomie d'affichage est telle qu'une information est traduite par un fonctionnement différent de cette interface. Ainsi, par exemple, l'alimentation d'une diode électroluminescente de couleur rouge peut indiquer une erreur, l'alimentation d'une diode électroluminescente de couleur verte, un accusé de réception positif, et différents clignotements de ces diodes électroluminescentes des états intermédiaires ou des fonctionnalités différentes (bonne ou mauvaise configuration d'une position de fin de course, enregistrement d'un nouvel émetteur, etc.)

Bien que ces ergonomies de retour d'information soient étudiées pour être simples et intuitives, la quantité d'information transmise est nécessairement limitée.

L'utilisateur peut trouver que le fonctionnement de son installation domotique est limité s'il n'a pas la possibilité de visualiser plus précisément, notamment la cause d'un dysfonctionnement de son installation.

Dans le domaine des commandes à distance, il existe sur le marché un certain nombre de télécommandes dites universelles, permettant d'afficher les fonctions et paramètres des équipements qu'elles vont commander. Cela suppose des interfaces utilisateurs relativement évoluées, avec écran d'affichage de grande taille.

Dans des domaines plus éloignés, on connaît des documents (US 4,916,439 et US 6,424,252) des systèmes d'alertes à distance d'un utilisateur de l'état de fonctionnement d'un appareil électroménager tel qu'une machine à laver ou un sèche-linge. Lorsque le cycle de l'appareil électroménager se termine, un message est envoyé vers un terminal portable que l'utilisateur porte sur lui. L'état de l'appareil est alors affiché sur ce terminal portable, de manière à alerter l'utilisateur de la fin du cycle.

Ces systèmes ne permettent pas l'affichage d'information plus détaillée, sauf au prix d'une interface utilisateur spécifique, évoluée, plus encombrante et coûteuse.

On connaît aussi du document FR 2 856 823, un système domotique dont l'état d'un dispositif peut être connu par affichage sur un moyen d'affichage tel qu'un écran de téléphone portable ou d'ordinateur, l'état du dispositif étant transmis à distance au moyen d'affichage par l'intermédiaire d'un réseau.

On connaît encore du document FR 2 854 269, un système domotique dont l'état d'un dispositif peut être connu par affichage sur un moniteur, l'état du dispositif étant transmis à distance au moniteur par l'intermédiaire d'un signal radio.

On connaît enfin du brevet US 5,554,979, un système domotique comprenant un point de commande nomade permettant d'envoyer de manière sélective des ordres de commande à différents dispositifs domotiques. Le système domotique comprend en outre un moniteur, lié aux dispositifs domotiques. Celui-ci peut être activé par le point de commande. Le moniteur est utilisé pour commander les dispositifs domotiques occasionnellement. Il comprend également des moyens d'affichage d'informations. Les informations affichées sont celles reçues directement des dispositifs domotiques et non du point de commande.

On connaît de la demande US 2006/101721 un système de protection incendie comprenant des dispositifs de fermeture motorisés, ces portes étant commandées par différents moyens de commande communiquant entre eux grâce à des liaisons filaires ou non filaires. L'affichage de résultats de tests ou de rapports de mauvais fonctionnement peut être affiché au niveau de différents sites locaux ou à travers le système au niveau d'un contrôleur général.

On connaît de la demande US 2004/250964 un système de plusieurs stores motorisés dont les unités de commande sont reliées en réseau. Le système comprend une ou plusieurs interfaces utilisateur montées dans un mur à proximité des stores. Le système peut également comprendre une télécommande nomade infrarouge pour communiquer avec cette ou ces interfaces. Cette ou ces interfaces comprennent des LED pour afficher des informations, notamment des informations d'erreur.

Les systèmes décrits dans ces deux derniers documents sont le siège de trafics de communications très importants du fait de leurs organisations hiérarchiques à plusieurs niveaux notamment aux fins de permettre un même affichage d'information en plusieurs endroits de l'installation.

Le but de l'invention est de fournir un procédé de communication permettant de pallier les problèmes évoqués ci-dessus et d'améliorer les procédés de communication connus de l'art antérieur. En particulier, le procédé selon l'invention permet de commander un système domotique avec une majorité de points de commande ayant une structure très simple et donc un prix de revient peu élevé tout en assurant un maximum de fonctionnalité, notamment la possibilité d'informer de manière très précise l'utilisateur du système en ce qui concerne l'état du système. Un autre but de l'invention est de permettre ceci en n'augmentant quasiment pas le trafic de communications dans le système domotique.

Le procédé de communication selon l'invention est défini par la revendication 1.

Différents modes d'exécution de ce procédé sont définis par les revendications 2 à 8.

Le système domotique selon l'invention est défini par la revendication 9.

Un mode de réalisation particulier d'un tel système est défini par la revendication 10.

Le dessin annexé représente, à titre d'exemple, un système domotique apte à permettre la mise en oeuvre d'un procédé de communication selon l'invention et des ordinogrammes expliquant le fonctionnement de deux variantes d'exécution du procédé de communication selon l'invention.

La figure 1 est un schéma d'un mode de réalisation d'un système domotique selon l'invention.

Les figures 2 à 4 sont des ordinogrammes expliquant le fonctionnement deux variantes d'exécution du procédé de communication selon l'invention dans différentes situations.

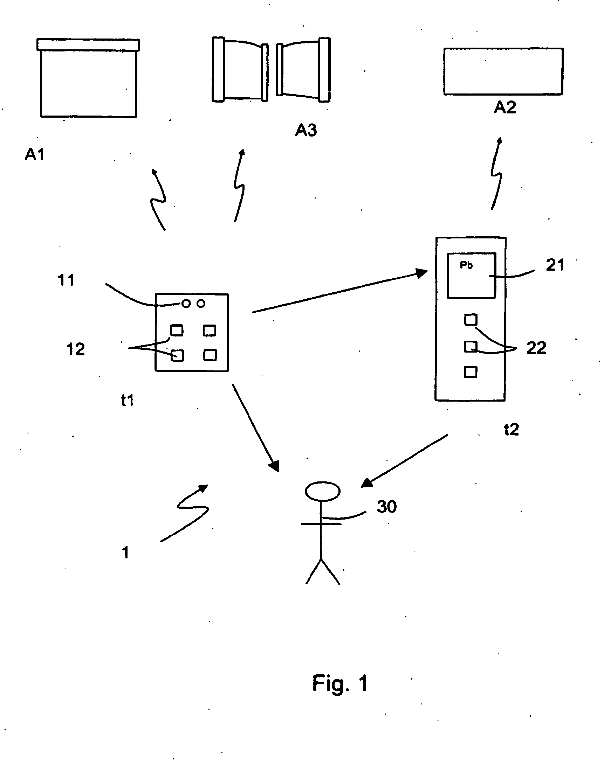

Un système domotique 1 selon l'invention est décrit en référence à la figure 1. Il comprend principalement différents dispositifs domotiques tels que par exemple un volet roulant motorisé A1, un dispositif d'éclairage A2 et un portail motorisé A3. Il comprend en outre deux points de commande permettant d'envoyer des ordres de commande à destination des dispositifs domotiques.

Un premier point de commande t1 comprend des touches de commande 12 et un premier moyen d'affichage 11 pour indiquer des informations à un utilisateur 30. Ce moyen d'affichage est limité. Il permet au plus de signifier à l'utilisateur des indications simples telles que, par exemple, l'existence d'informations consultables comme l'existence d'un problème de fonctionnement du système. Il ne comprend cependant pas de moyen pour afficher à l'attention de l'utilisateur des indications plus complexes telles que, par exemple, la nature des informations, comme la nature d'un problème de fonctionnement du système. Il comprend en outre des moyens tels qu'un microcontrôleur et un émetteur-récepteur de signaux pour émettre et recevoir des informations et notamment des ordres de commande en réponse à des activations des touches de commande. L'émetteur-récepteur est de préférence non filaire et par exemple de type infrarouge ou radio. Le premier point de commande t1 permet de piloter à distance les dispositifs A1 et A3. Pour cela, une reconnaissance préalable, par exemple par échange d'identifiant entre le premier point de commande t1 et les dispositifs A1 et A3, aura été établie, de manière connue. Le premier moyen d'affichage peut par exemple comprendre des diodes électroluminescentes 11. Alternativement, le premier point de commande peut ne pas présenter de moyen d'affichage. Par moyen d'affichage limité, on entend un moyen ne permettant pas ou difficilement l'affichage d'une information complexe. De préférence, un moyen d'affichage limité ne permet pas d'afficher une chaîne de caractères alphanumériques.

Un deuxième point de commande t2 comprend des touches de commande 22 et un deuxième moyen d'affichage 21 pour indiquer des informations à l'utilisateur. Ce moyen d'affichage est étendu. Il permet de signifier à l'utilisateur des indications complexes telles que, par exemple, la nature d'informations, comme la nature d'un problème de fonctionnement du système. Il comprend en outre des moyens tels qu'un microcontrôleur et un émetteur-récepteur de signaux pour émettre et recevoir des informations et notamment des ordres de commande en réponse à des activations des touches de commande. L'émetteur-récepteur est de préférence non filaire et par exemple de type infrarouge ou radio. Le deuxième point de commande t2 permet de piloter à distance le dispositif A2. Pour cela, une reconnaissance préalable, par exemple par échange d'identifiant, aura été établie, de manière connue. Le deuxième moyen d'affichage peut comprendre un écran d'affichage, par exemple, un écran d'affichage d'une chaîne de caractères alphanumériques et notamment un écran d'affichage du type à cristaux liquides 21. Par moyen d'affichage étendu, on entend un moyen permettant l'affichage d'une information complexe. De préférence, un moyen d'affichage étendu permet d'afficher une chaîne de caractères alphanumériques. Ainsi, le deuxième moyen d'affichage permet d'afficher de manière plus détaillée les informations.

L'utilisation de différents niveaux de détail d'informations, tels qu'un premier niveau d'affichage limité des informations et un deuxième niveau d'affichage détaillé des informations, n'est pas connue des différents documents de l'art antérieur évoqués précédemment.

La mise en oeuvre de l'invention nécessite également que les deux points de commande t1 et t2 se "connaissent", c'est-à-dire qu'ils partagent une même clé et/ou aient échangé préalablement leurs identifiants. Cela peut avoir lieu lors d'une configuration classique, l'échange d'identifiant ayant cette fois lieu entre les deux points de commande.

Les deux points de commande sont par exemple alimentés par des piles.

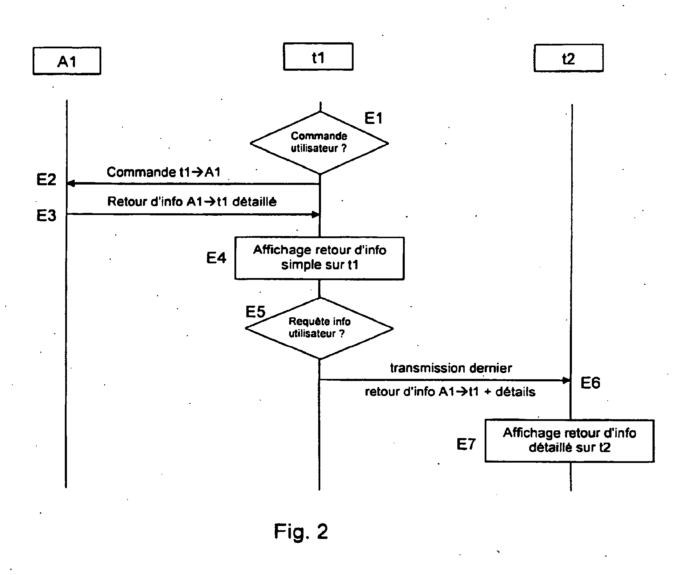

Le procédé de communication entre éléments dans ce système domotique est illustré au travers de différentes situations expliquées en référence aux figures 2 à 4.

Comme illustré à la figure 2, dans une première étape E1, le premier point de commande t1 teste si l'utilisateur agit sur l'une des touches de commande.

Si tel est le cas, dans une étape suivante E2, un ordre de commande correspondant à la touche actionnée dans l'étape précédente est envoyé au dispositif domotique A1.

Dans une étape suivante E3, dès réception de l'ordre de commande par le dispositif domotique ou dès exécution de l'ordre de commande par le dispositif domotique, des informations d'accusé de réception ou d'exécution sont envoyées du dispositif domotique au premier point de commande.

Dans une étape E4, une indication relative à ces informations est affichée sur le premier point de commande. Cette indication consiste par exemple à allumer l'une des diodes du premier point de commande pour indiquer à l'utilisateur que des informations concernant le dispositif domotique ou la communication entre ce dispositif et le premier point de commande sont disponibles. L'indication ne consiste ainsi qu'à indiquer l'existence d'informations consultables.

Dans une étape E5, le premier point de commande teste si l'utilisateur agit sur le système pour avoir accès aux informations disponibles.

Si tel est le cas, dans une étape E6, le premier point de commande envoie au deuxième point de commande les informations disponibles. L'attente d'une requête de l'utilisateur sur le premier point de commande permet de limiter le trafic des communications sur le réseau à ce qui est nécessaire. Il serait en effet inutile d'envoyer des informations au deuxième point de commande alors que l'utilisateur ne souhaite pas les consulter.

Dans une étape suivante E7, les informations disponibles sont affichées sur l'écran d'affichage 21 du deuxième point de commande t2. Bien que celui-ci ne pilote pas le dispositif A1, il est utilisé comme affichage supplémentaire.

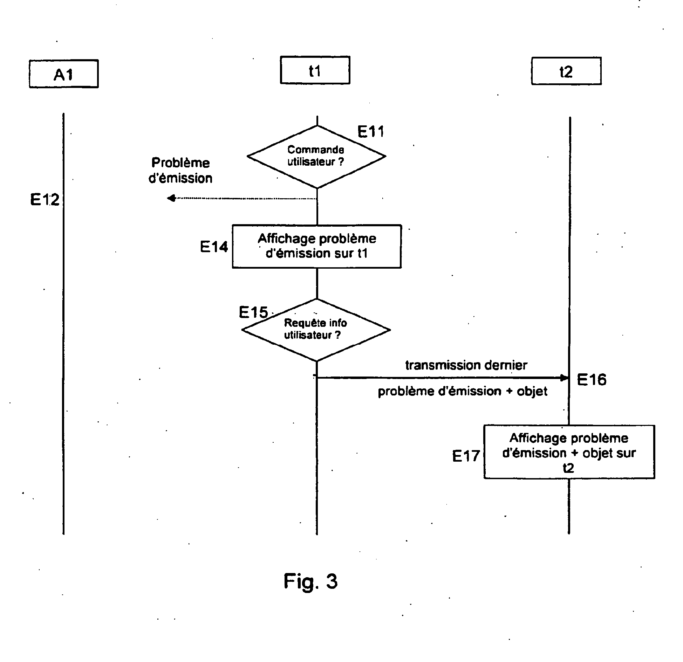

Un autre cas de figure est représenté à la figure 3. Dans une première étape E11, le premier point de commande t1 teste si l'utilisateur agit sur l'une des touches de commande.

Si tel est le cas, dans une étape suivante E12, un ordre de commande correspondant à la touche actionnée dans l'étape précédente est envoyé au dispositif domotique A1. Cependant, compte tenu d'un problème de transmission, l'ordre de commande n'est pas reçu par le dispositif domotique A1.

Dans une étape E14, une indication relative à un problème de communication est affichée sur le premier point de commande. Cette indication est provoquée par une absence de retour d'information dans un délai donné suite à l'émission de l'ordre de commande. L'indication consiste par exemple à allumer l'une des diodes du premier point de commande pour indiquer à l'utilisateur qu'un problème de communication a été rencontré.

Dans une étape E15, le premier point de commande teste si l'utilisateur agit sur lui pour avoir accès à la nature du problème de communication. Là encore, l'attente d'une requête de l'utilisateur sur le premier point de commande permet de limiter le trafic des communications sur le réseau à ce qui est nécessaire. Il serait en effet inutile d'envoyer des informations au deuxième point de commande alors que l'utilisateur ne souhaite pas les consulter.

Si tel est le cas, dans une étape E16, le premier point de commande envoie au deuxième point de commande des informations sur la nature du problème de communication. En effet, le premier point de commande connaît la nature du problème (dans ce cas pas de retour d'information dans le délai prévu) mais ne peut l'exprimer autrement que par une ergonomie déterminée, dans ce cas l'allumage d'une diode orange par exemple).

Dans une étape suivante E17, les informations sur la nature du problème de communication sont affichées sur l'écran d'affichage 21 du deuxième point de commande t2.

Une variante d'exécution du procédé de communication permet de déterminer plus précisément la nature d'éventuels problèmes de communication.

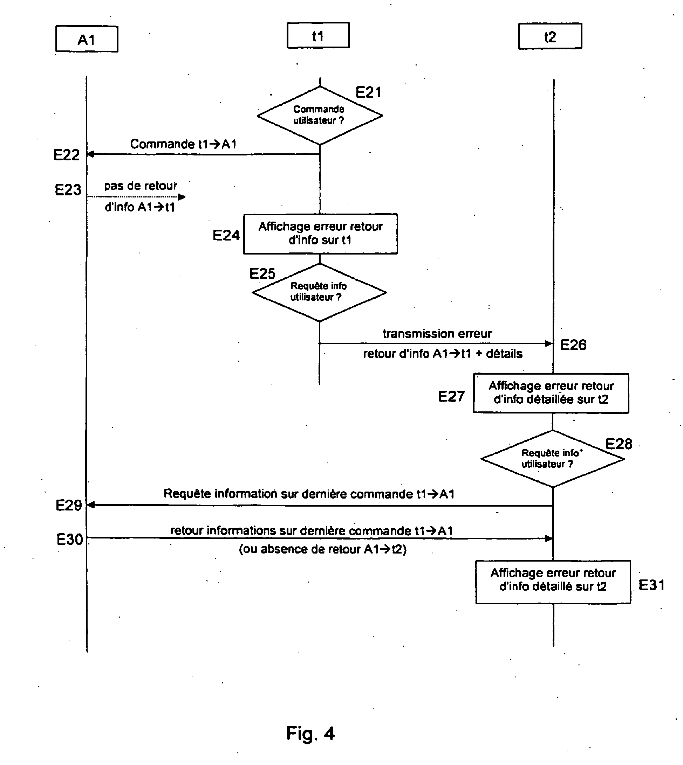

Comme illustré à la figure 4, dans une première étape E21, le premier point de commande t1 teste si l'utilisateur agit sur l'une des touches de commande.

Si tel est le cas, dans une étape suivante E22, un ordre de commande correspondant à la touche actionnée dans l'étape précédente est envoyé au dispositif domotique A1.

Dans une étape suivante E23, dès réception de l'ordre de commande par le dispositif domotique ou dès exécution de l'ordre de commande par le dispositif domotique, des informations d'accusé de réception ou d'exécution sont envoyées du dispositif domotique au premier point de commande. Cependant, compte tenu d'un problème de transmission, les informations ne sont pas reçues par le premier point de commande.

Dans une étape E24, une indication relative à un problème de communication est affichée sur le premier point de commande. Cette indication est provoquée par une absence de retour d'information dans un délai donné suite à l'émission de l'ordre de commande. L'indication consiste par exemple à allumer l'une des diodes du premier point de commande pour indiquer à l'utilisateur qu'un problème de communication a été rencontré.

Dans une étape E25, le premier point de commande teste si l'utilisateur agit sur le système pour avoir accès à la nature du problème de communication. L'attente d'une requête de l'utilisateur sur le premier point de commande permet de limiter le trafic des communications sur le réseau à ce qui est nécessaire. Il serait en effet inutile d'envoyer des informations au deuxième point de commande alors que l'utilisateur ne souhaite pas les consulter.

Si tel est le cas, dans une étape E26, le premier point de commande envoie au deuxième point de commande des informations sur la nature du problème de communication.

Dans une étape suivante E27, les informations sur la nature du problème de communication sont affichées sur l'écran d'affichage 21 du deuxième point de commande t2.

Dans une étape suivante E28, le deuxième point de commande teste si l'utilisateur agit sur le système pour avoir plus d'informations sur la nature du problème de communication. Il y a là possibilité d'accéder, sur demande, à un deuxième niveau d'informations. Ce niveau d'informations est de même accessible que sur requête pour limiter le trafic des communications sur le réseau à ce qui est nécessaire. Il serait en effet inutile d'envoyer des informations au deuxième point de commande alors que l'utilisateur ne souhaite pas les consulter.

Si tel est le cas, dans une étape suivante E29, une requête d'information est envoyée du point de commande t2 au point au dispositif de commande A1. Cette requête porte sur la nature du dernier ordre de commande reçu par le dispositif domotique A1 et émanant du premier point de commande t1.

Dans une étape suivante E30, les informations sur la nature du dernier ordre de commande sont transmises du dispositif domotique A1 au deuxième point de commande.

En fonction de ces informations ou de leur absence, dans une étape E31, le deuxième point de commande t2 affiche sur son écran d'affichage 21 des informations détaillées sur la nature du problème de communication.

Les étapes E28 à E31 pourraient également être mises en oeuvre à la suite de l'étape E17 de la figure 3.

En particulier dans ce cas, résultant d'une erreur de transmission entre le dispositif domotique et le premier point de commande, la sollicitation de du dispositif domotique par le deuxième point de commande t2 dans l'étape E29 permet éventuellement d'obtenir plus d'information que n'a pu en délivrer le premier point de commande t1.

Dans le cas de la figure 4, la sollicitation du dispositif domotique pourrait également être mise en oeuvre depuis le premier point de commande t1.

Le deuxième point de commande du système permet de commander un ou plusieurs dispositifs domotiques dans le système. Celui-ci ne permet pas nécessairement de commander les dispositifs domotiques qui peuvent être commandés par le premier point de commande.

On peut prévoir un appairage particulier entre le deuxième point de commande et les différents dispositifs du système domotique, afin qu'il soit possible d'interroger les dispositifs depuis ce deuxième point de commande sans nécessairement pouvoir les commander (notamment pour la mise en ouvre des étapes E29 et E30.

L'invention peut également être mise en oeuvre lorsque le premier point de commande est un automatisme (comprenant notamment un capteur de vent, un capteur de soleil, une horloge...). Il est alors fréquent que des automatismes ne disposent pas d'interface visuelle, ou que celle-ci ne soit plus accessible une fois l'automatisme installé sur le site. Cela n'interdit pas le retour d'information vers cet automatisme, ce retour d'information pouvant servir pour la construction d'une future commande, une auto-adaptation du système ou même simplement pour signaler qu'une commande n'a pas pu être exécutée. Il est alors tout à fait envisageable dans le cadre de l'invention, de pouvoir interroger cet automatisme, depuis le deuxième point de commande, pour permettre à l'utilisateur de connaître le contenu de l'accusé de réception qu'a reçu l'automatisme.

Dans les différentes situations expliquées en référence aux figures 2 à 4, il est fait mention d'un accusé de réception ou d'exécution émis par le dispositif domotique. On peut éventuellement prévoir qu'un certain nombre de ces accusés de réception ou d'exécution soient mis en mémoire au niveau du premier point de commande. L'utilisateur pourrait alors utiliser des ergonomies particulières au niveau de l'un ou de l'autre des points de commande pour rappeler, transmettre et afficher un ou plusieurs de ces accusés de réception ou d'exécution.

La transmission d'informations peut être mise en oeuvre soit dans des cas limités (nécessitant par exemple un rapprochement physique des deux points de commande), soit sur requête de l'utilisateur, soit de manière systématique. Dans le dernier cas, l'affichage peut éventuellement être mis en oeuvre uniquement sur requête de l'utilisateur. Ainsi, dans le dernier cas, les étapes de dialogue et d'affichage sont séparées dans le temps.

## Revendications

1. Procédé de communication dans un système domotique (1) comprenant:
- au moins un premier dispositif domotique (A1) pour entraîner en mouvement un élément mobile de protection solaire, d'occultation ou de fermeture,
- un premier point de commande (t1) à distance destiné à commander ce dispositif domotique (A1) et comprenant un moyen d'affichage limité (11) ou ne comprenant pas de moyen d'affichage et
- un deuxième point de commande (t2) à distance destiné à commander le premier dispositif domotique (A1) et/ou un autre dispositif domotique (A2, A3) et comprenant un écran d'affichage (21),
le procédé de communication comprenant en outre:
- une première étape d'émission d'une information du premier point de commande au deuxième point de commande, l'information étant relative au premier dispositif domotique ou à une communication entre le premier point de commande et le premier dispositif domotique et
- une deuxième étape d'affichage de cette information sur l'écran d'affichage du deuxiéme point de commande, l'affichage de cette information sur l'écran d'affichage étant plus détaillé que celui que peut délivrer le premier point de commande,
la première étape faisant suite à une requête de l'utilisateur.

2. Procédé de communication selon la revendication 1, **caractérisé en ce que** le premier point de commande retransmet au deuxième point de commande un accusé de réception reçu du premier dispositif domotique.

3. Procédé de communication selon l'une des revendications précédentes, **caractérisé en ce que** le premier point de commande informe le deuxième point de commande d'un dysfonctionnement intervenu lors d'une communication avec le premier dispositif domotique.

4. Procédé de communication selon l'une des revendications précédentes, **caractérisé en ce que** la deuxième étape fait suite à une requête de l'utilisateur.

5. Procédé de communication selon l'une des revendications précédentes, **caractérisé en ce que** la première étape d'émission d'une information et la deuxième étape d'affichage de l'information font suite à une manoeuvre particulière de l'utilisateur (30) sur le premier point de commande.

6. Procédé de communication selon l'une des revendications 1 à 5, **caractérisé en ce que** la première étape d'émission d'une information est systématique et **en ce que** la deuxième étape d'affichage de l'information fait suite à une manoeuvre particulière de l'utilisateur sur le deuxième point de commande.

7. Procédé de communication selon l'une des revendications 1 à 5, **caractérisé en ce que** la première étape d'émission d'une information fait suite à une manoeuvre particulière de l'utilisateur sur le deuxième point de commande et une requête de transfert d'information émise depuis le deuxième point de commande vers le premier point de commande.

8. Procédé de communication selon l'une des revendications précédentes, **caractérisé en ce qu'**il comprend une étape supplémentaire d'interrogation du premier dispositif domotique par le deuxième point de commande.

9. Système domotique (1) comprenant :
- au moins un premier dispositif domotique (A1) pour entraîner en mouvement un élément mobile de protection solaire, d'occultation ou de fermeture,
- un premier point de commande (t1) à distance destiné à commander ce dispositif domotique (A1) et
- un deuxième point de commande (t2) à distance destiné à commander le premier dispositif domotique (A1) et/ou un autre dispositif domotique (A2, A3) et comprenant un écran d'affichage (21),
**caractérisé en ce qu'**il comprend des moyens matériels et logiciels pour mettre en oeuvre le procédé de communication selon l'une des revendications précédentes.

10. Système domotique selon la revendication 9, **caractérisé en ce que** le premier point de commande comprend un moyen d'affichage (11) constitué d'un ou plusieurs voyants et **en ce que** l'écran d'affichage du deuxième point de commande est apte à afficher une chaîne de caractères alphanumériques.

## Claims

1. Method of communication in a home automation system (1), including
- at least a first home automation device (A1) for driving into movement a mobile element for solar protection, privacy or closing,
- a first remote control point (t1) for controlling that home automation device (A1) and including a limited display means (11), or not including any display means, and
- a second remote control point (t2) for controlling the first home automation device (A1) and/or another home automation device (A2, A3), and including a display screen (21),
wherein the method of communication further comprises
- a first step of transmitting an information from the first control point to the second control point, this information relating to the first home automation device or to a communication between the first control point and the first home automation device, and
- a second step of displaying this information on the display screen of the second control point, the display of this information on the display screen being more detailed than the display the first control point can yield,
the first step following a demand of the user.

2. Method of communication according to claim 1, **characterised in that** the first control point retransmits an acknowledgement of receipt received from the first home automation device, to the second control point.

3. Method of communication according to any one of the preceding claims, **characterised in that** the first control point informs the second control point of any malfunctioning coming up during a communication with the first home automation device.

4. Method of communication according to any one of the preceding claims, **characterised in that** the second step follows a demand of the user.

5. Method of communication according to any one of the preceding claims, **characterised in that** the first step of transmitting an information, and the second step of displaying the information, follows a particular manual action of the user (30) on the first control point.

6. Method of communication according to any one of claims 1 to 5, **characterised in that** the first step of transmitting an information is a systematic step, and **in that** the second step of displaying the information follows a particular manual action of the user on the second control point.

7. Method of communication according to any one of claims 1 to 5, **characterised in that** the first step of transmitting an information follows a particular manual action of the user on the second control point and a demand to transfer the information transmitted from the second control point to the first control point.

8. Method of communication according to any one of the preceding claims, **characterised in that** it comprises an additional step of interrogating the first home automation device by the second control point.

9. Home automation system (1), including:
- at least one first home automation device (A1) for driving into movement a mobile element for solar protection, privacy or closing,
- a first remote control point (t1) for controlling that home automation device (A1), and
- a second remote control point (t2) for controlling the first home automation device (A1) and/or another home automation device (A2, A3), and including a display screen (21),
**characterised in that** the system comprises hardware means and software means for carrying out the communication method according to any one of the preceding claims.

10. Home automation system according to claim 9, **characterised in that** the first control point includes a display means (11) composed of one or more indicating elements, and **in that** the display screen of the second control point is capable of displaying a series of alphanumeric characters.

## Patentansprüche

1. Verfahren zur Kommunikation in einer haustechnischen Anlage (1), enthaltend:
- mindestens eine erste haustechnische Vorrichtung (A1) zum Bewegungsantrieb eines beweglichen Elements zum Sonnenschutz, zur Abdunkelung oder zum Verschliessen,
- einen ersten Fernsteuerpunkt (t1), welcher zum Steuern dieser haustechnischen Vorrichtung (A1) bestimmt ist und ein Mittel zur begrenzten Anzeige (11) oder gar kein Anzeigemittel aufweist, und
- einen zweiten Fernsteuerpunkt (t2), welcher zum Steuern der ersten haustechnischen Vorrichtung (A1) und/oder einer anderen haustechnischen Vorrichtung (A2, A3) bestimmt ist und einen Anzeigeschirm (21) aufweist,
wobei das Verfahren zur Kommunikation zusätzlich umfasst:
- einen ersten Schritt, bei dem eine Information vom ersten Steuerpunkt zum zweiten Steuerpunkt gesendet wird, wobei sich die Information auf die erste haustechnische Vorrichtung oder auf eine Kommunikation zwischen dem ersten Steuerpunkt und dem zweiten Steuerpunkt bezieht, und
- einen zweiten Schritt, bei dem eine Anzeige dieser Information auf dem Anzeigeschirm des zweiten Steuerpunkts vorgenommen wird, wobei die Anzeige dieser Information auf dem Anzeigeschirm detaillierter ist als diejenige, welche der erste Steuerpunkt liefern kann, und
wobei der erste Schritt auf ein Verlangen des Benutzers folgt.

2. Verfahren zur Kommunikation nach Anspruch 1, **dadurch gekennzeichnet, dass** der erste Steuerpunkt dem zweiten Steuerpunkt eine Empfangsbestätigung übersendet, welche er von der ersten haustechnischen Vorrichtung erhalten hat.

3. Verfahren zur Kommunikation nach einem der vorstehenden Ansprüche, **dadurch gekennzeichnet, dass** der erste Steuerpunkt den zweiten Steuerpunkt über Betriebsstörungen informiert, die bei einer Kommunikation mit der ersten haustechnischen Vorrichtung auftreten.

4. Verfahren zur Kommunikation nach einem der vorstehenden Ansprüche, **dadurch gekennzeichnet, dass** der zweite Verfahrensschritt auf Verlangen des Benutzers ausgeführt wird.

5. Verfahren zur Kommunikation nach einem der vorstehenden Ansprüche, **dadurch gekennzeichnet, dass** der erste Schritt zum Absenden einer Information und der zweite Schritt zur Anzeige der Information durch eine besondere Betätigung auf dem ersten Steuerpunkt durch den Benutzer (30) eingeleitet werden.

6. Verfahren zur Kommunikation nach einem der Ansprüche 1 bis 5, **dadurch gekennzeichnet, dass** der erste Verfahrensschritt zum Absenden einer Information systematisch vorgenommen wird, und dass der zweite Schritt zum Anzeigen der Information durch eine besondere Betätigung auf dem zweiten Steuerpunkt durch den Benutzer eingeleitet wird.

7. Verfahren zur Kommunikation nach einem der Ansprüche 1 bis 5, **dadurch gekennzeichnet, dass** der erste Verfahrensschritt zum Senden einer Information durch eine besondere Betätigung am ersten Steuerpunkt durch den Benutzer sowie nach einem Befehl zum Übertragen der gesendeten Information vom zweiten Steuerpunkt zum ersten Steuerpunkt vorgenommen wird.

8. Verfahren zur Kommunikation nach einem der vorstehenden Ansprüche, **dadurch gekennzeichnet, dass** es als zusätzlichen Schritt das Abfragen der ersten haustechnischen Vorrichtung vom zweiten Steuerpunkt aus umfasst.

9. Haustechnisches System (1), enthaltend:
- mindestens eine erste haustechnische Vorrichtung (A1) zum Bewegungsantrieb eines beweglichen Elements zum Sonnenschutz, zur Abdunkelung oder zum Verschliessen,
- einen ersten Fernsteuerpunkt (t1), welcher zum Steuern dieser haustechnischen Vorrichtung (A1) bestimmt ist, und
- einen zweiten Fernsteuerpunkt (t2) zum Steuern der ersten haustechnischen Vorrichtung (A1) und/oder einer anderen haustechnischen Vorrichtung (A2, A3), und welcher einen Anzeigeschirm (21) aufweist,
**dadurch gekennzeichnet, dass** das System Hardwaremittel und Softwaremittel zur Ausführung des Verfahrens zur Kommunikation nach einem der vorstehenden Ansprüche umfasst.

10. Haustechnisches System nach Anspruch 9, **dadurch gekennzeichnet, dass** der erste Steuerpunkt ein Anzeigemittel (11) enthält, welches sich aus einem oder mehreren Anzeigeelementen zusammensetzt, und dass der Anzeigeschirm am zweiten Steuerpunkt dazu eingerichtet ist, eine Folge von alphanumerischen Zeichen anzuzeigen.
